# EUROPÄISCHE PATENTSCHRIFT

(11) **EP 2 499 018 B1**
(45) Veröffentlichungstag und Bekanntmachung des Hinweises auf die Patenterteilung: **03.08.2016**
(21) Anmeldenummer: 10778553.7
(22) Anmeldetag: 28.10.2010
(51) Int. Cl.: B60N 2/225

(54) **BESCHLAG FÜR EINEN FAHRZEUGSITZ**
FITTING FOR A VEHICLE SEAT
FERRURE POUR SIÈGE DE VÉHICULE

(30) Priorität: 10.11.2009 DE 202009017811 U; 22.03.2010 DE 102010012980
(43) Veröffentlichungstag der Anmeldung: 19.09.2012
(73) Patentinhaber: Johnson Controls Components GmbH & Co. KG, 67657 Kaiserslautern (DE)
(72) Erfinder: JOKIEL,. Christian, 42579 Heiligenhaus (DE); STILLEKE, Martin, 45657 Recklinghausen (DE)
(74) Vertreter: Liedhegener, Ralf
(86) Internationale Anmeldenummer: PCT/EP2010/006605
(87) Internationale Veröffentlichungsnummer: WO 2011/057720

(56) Entgegenhaltungen:
- WO-A1-2010/121758
- DE-A1- 4 411 214
- DE-C1- 19 548 809
- DE-U1-202009 007 520

## Beschreibung

Die Erfindung betrifft einen Beschlag für einen Fahrzeugsitz mit den Merkmalen des Oberbegriffs des Anspruches 1.

Ein Beschlag ist z.B. aus der DE 195 48 809 C1 bekannt. Ohne das dort offenbarte Sperrelement würde es unter dynamischen Betriebsbedingungen, d.h. während der Fahrt, durch Rütteln und Stoßen zu Bewegungen der Keilsegmente kommen, was wiederum zu einer Relativbewegung der Beschlagteile führen könnte, dem sogenannten "Ablaufen". Das Sperrelement verhindert das Ablaufen, indem es einerseits mittels der Ränder von an ihm ausgebildeten Öffnungen und mittels der Endfinger einer die Keilsegmente beaufschlagenden Feder die Keilsegmente festhält und andererseits mittels an ihm ausgebildeter Rastnasen mit einem der Beschlagteile zusammenwirkt, genauer gesagt mit der Kehrseite der Außenverzahnung des Zahnrades, welche sonst keine weitere Funktion hat.

Aus der DE 20 2009 007 520 U1 ist ein Beschlag für einen Fahrzeugsitz mit den Merkmalen des Oberbegriffs des Anspruches 1 mit einem Sperrring bekannt, dessen Lagerung im Beschlag nicht näher beschrieben ist. Eine Gleitlagerbuchse des Beschlags schließt in axialer Richtung bündig mit einem Kragenzug ab und weist keinen Überstand in Richtung des Sperrrings auf.

Die DE 44 11 214 A1 offenbart einen Beschlag, bei dem die Gleitlagerbuchse in ein Stirnzahnrad eingepresst ist und mit einer Abrundung und einem Umformwulst axial über die von ihr ausgekleidete Aufnahme übersteht. Das Stirnzahnrad kämmt mit einem Zahnkranz, der an einem zweiten Beschlagteil ausgebildet ist. Ein Sperrelement ist nicht vorgesehen.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Die Ausbildung des Zahnkranzes an dem den Exzenter aufnehmenden ersten Beschlagteil und die Ausbildung des Zahnrades an dem den Exzenter abstützenden zweiten Beschlagteil spart Material und Bauraum, indem das Zahnrad am radial äußeren Rand des zweiten Beschlagteils ausgebildet werden kann (welches dann vorzugsweise ein am ersten Beschlagteil befestigter Umklammerungsring übergreift) und trotzdem ausreichend große Verbindungsbereiche am zweiten Beschlagteil zur Montage des Beschlags zur Verfügung stehen. Das Zahnrad am radial äußeren Rand des zweiten Beschlagteils wird dann vorzugsweise von einem am ersten Beschlagteil befestigten Umklammerungsring übergriffen. Die im wesentlichen flache Form des Umklammerungsrings benötigt gegenüber der bekannten L-förmig profilierten Ausbildung weniger Material, was zu einer Einsparung von Gewicht und Kosten führt.

Die Ausbildung der - gegenüber dem Zahnkranz separaten - Verzahnung an dem den Exzenter aufnehmenden ersten Beschlagteil erlaubt die Übernahme des Konzepts, den Exzenter im nicht-angetriebenen Zustand des Beschlags zu sperren. Beim Prägen des Zahnkranzes entsteht auf dessen Kehrseite eine nach außen weisende Gegenverzahnung. Die vom Zahnkranz und dessen Kehrseite separate Ausbildung der Verzahnung ermöglicht eine bauraumsparende Anpassung der Geometrien von Sperrelement und Verzahnung.

Das erfindungsgemäße Sperrelement weist vorzugsweise eine Ringform auf, beispielsweise aus zwei Bögen, und sitzt vorzugsweise auf einem Überstand einer Gleitlagerbuchse, mittels welcher das erste Beschlagteil den Exzenter aufnimmt. Entsprechende Federarme sorgen für einen Kraftschluss. Optional können Führungsabschnitte vorgesehen sein, welche die Lagerung auf dem Überstand verbessern. Eine einstückige Ausbildung aus Federstahl ermöglicht eine einfache Integration der Merkmale des Sperrelementes. Zum Zusammenwirken mit der Verzahnung des ersten Beschlagteils, welche vorzugsweise als Zahnkranz mit radial nach innen weisenden Zähnen ausgebildet ist, sind vorzugsweise Sperrnasen vorgesehen, die radial nach außen weisen. Zum Zusammenwirken mit dem Exzenter sind vorzugsweise Öffnungen vorgesehen, welche die Feder des vorzugsweise aus zwei Keilsegmenten bestehenden Exzenters durchdringt. Zum Zusammenwirken mit dem Mitnehmer sind vorzugsweise Stützfinger vorgesehen, welche der Mitnehmer mittels Aussteuernocken beaufschlagen kann.

Gegenüber Lösungen, bei denen das Sperrelement mit Verzahnungen an der Gleitlagerbuchse (DE 10 2007 010 078 B4) oder an einem Kragen der von der Gleitlagerbuchse ausgekleideten Aufnahme zusammenwirkt, besteht vorliegend der Vorteil, dass ein größerer Radius der Verzahnung einen größeren Hebelarm für das Sperrmoment definiert.

Das Sperrelement dient vorrangig dem Sperren des Beschlags unter dynamischen Belastungen. Der Grundanteil beim Sperren wird durch die Reibung zwischen dem Exzenter und einem der beiden Beschlagteile aufgebracht, vorzugsweise dem zweiten Beschlagteil, welches vorzugsweise einen Kragen zum Abstützen des Exzenters aufweist. Die vorzugsweise vorgesehenen Keilsegmente, welche den Exzenter definieren, dienen sowohl dem Sperren als auch dem Antreiben der Abwälzbewegung von Zahnrad und Zahnkranz.

Die Verwendung eines Exzenterumlaufgetriebes erlaubt eine stufenlose Neigungseinstellung der Lehne. Die Einsparung eines zentralen Ritzels gegenüber einem Planetenumlaufgetriebe führt zur Entstehung einer Taumelbewegung, die der relativen Drehung der Beschlagteile überlagert ist. Das Exzenterumlaufgetriebe kann manuell oder motorisch angetrieben werden.

In der DE 44 11 214 C2 wird beschrieben, wie die Gleitlagerbuchse in die Aufnahme des ersten Beschlagteils eingebracht wird. Hierzu wird in einem ersten Schritt das erste Beschlagteil in einem Halter eines Werkzeugs befestigt und die Gleitlagerbuchse auf einen Dorn des Werkzeugs gesetzt. In einem zweiten Schritt wird durch eine Relativbewegung von Dorn und erstem Beschlagteil die Gleitlagerbuchse in die Aufnahme des ersten Beschlagteils eingepresst. Die Außenabmessung der Gleitlagerbuchse ist im Rahmen einer Presspassung etwas größer als die Innenabmessung der Aufnahme des ersten Beschlagteils gewählt, so dass Material verdrängt wird, welches sich an dem - bezüglich der Bewegung des Dorns - vorauseilenden Ende der Gleitlagerbuchse ansammelt und als Axialsicherung dient.

Die Ausbildung eines Sicherungsbereichs der Gleitlagerbuchse, welcher als Axialsicherung gegen ein Verschieben der Gleitlagerbuchse in axialer Richtung (vom zweiten Beschlagteil weg) wirkt, wobei der Sicherungsbereich vor oder nach dem Einpressen ausgebildet wird, hat den Vorteil, dass eine solche Axialsicherung nicht durch das Einpressen geschaffen werden muss, also toleranzunabhängig wird. Radiale Überschneidungen der etwas größeren Gleitlagerbuchse und der etwas kleineren Aufnahme des ersten Beschlagteils können gering gehalten werden. Dies verringert den Kraftaufwand beim Einpressen.

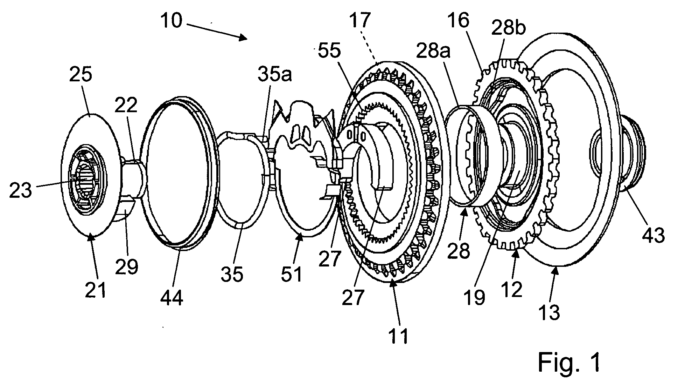

Im folgenden ist die Erfindung anhand eines in der Zeichnung dargestellten Ausführungsbeispiels näher erläutert. Es zeigen
- Fig. 1: eine Explosionsdarstellung des Beschlags,

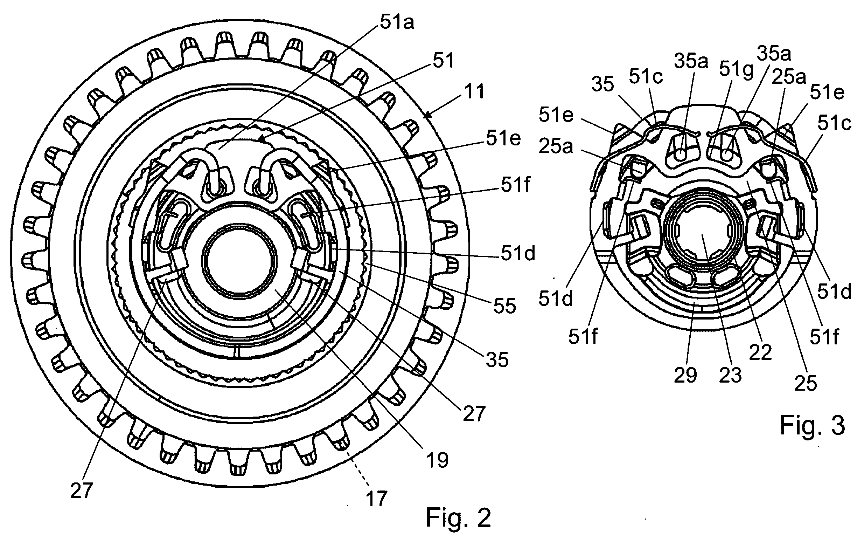

- Fig. 2: eine Teilansicht des Beschlags ohne Mitnehmer,
- Fig. 3: eine Ansicht von Mitnehmer, Feder und Sperrelement aus der entgegengesetzten Richtung zu Fig. 2,

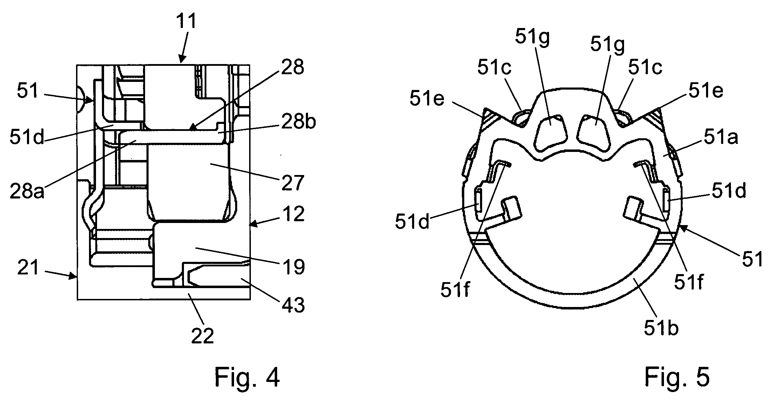

- Fig. 4: einen Teilschnitt durch den Beschlag,
- Fig. 5: eine Ansicht des Sperrelementes,

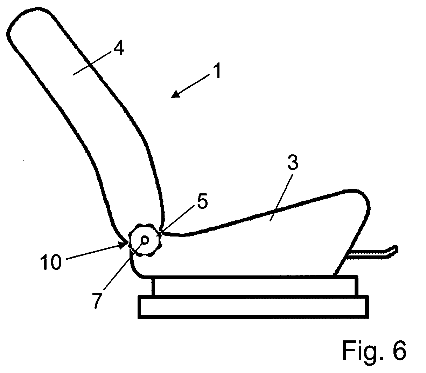

- Fig. 6: eine schematische Darstellung eines Fahrzeugsitzes,
- Fig. 7: einen Teilschnitt mit einer eingepressten Gleitlagerbuchse vor der Ausbildung ihres Sicherungsbereich,
- Fig. 8: der Teilschnitt von Fig. 7 nach Ausbildung des Sicherungsbereichs, welcher in einer Vertiefung des ersten Beschlagteils angeordnet ist,
- Fig. 9: einen Teilschnitt mit einer Gleitlagerbuchse, deren Sicherungsbereich vorgebildet ist, und
- Fig. 10: einen Teilschnitt mit einer Gleitlagerbuchse, deren Sicherungsbereich auf einer Stirnseite des ersten Beschlagteils aufliegt.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen sich jeweils näherungsweise in eine kreisrunde Scheibenform einbeschreiben. Zur Aufnahme der axial wirkenden Kräfte, also zum Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 A beschrieben. Der vorzugsweise metallische Umklammerungsring 13 ist fest mit einem der beiden Beschlagteile 11 und 12 verbunden, vorliegend dem ersten Beschlagteil 11 in einem äußeren Randabschnitt, beispielsweise verschweißt oder umgebördelt. Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen, ohne die Relativdrehung der beiden Beschlagteile 11 und 12 zu behindern. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt also im Kraftfluss zwischen Lehne 4 und Sitzteil 3, weshalb die beide Beschlagteile 11 und 12 aus Metall bestehen, vorzugsweise aus Stahl.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist noch als Sperrelement eine Sperrfeder 51 vorgesehen, wie sie beispielsweise in der DE 195 48 809 C1 offenbart ist. Die Sperrfeder 51 ist vorliegend einstückig aus Federstahl ausgebildet.

Die im wesentlichen ringförmige Sperrfeder 51 weist einen Grundbogen 51a, welcher in einer Ebene parallel zum ersten Beschlagteil 11 angeordnet ist, und einen Lagerbogen 51 b, welcher in einer zum Grundbogen 51 a versetzten Ebene angeordnet ist und sich beidseitig mittels jeweils einer Abkröpfung an den Grundbogen 51a unter Bildung der Ringform anschließt. Zwei Federarme 51c sind mit ihren freien Enden einander zugewandt und mit den von einander abgewandten Enden am Grundbogen 51 a angeformt. Während der Grundbogen 51 a und der Lagerbogen 51b größtenteils innerhalb der besagten beiden Ebenen in Umfangs- und in radialer Richtung liegen, erstrecken sich die beiden Federarme 51c in axialer Richtung zwischen den besagten beiden Ebenen. Vom Grundbogen 51 a stehen optional zwei umgebogene, zylindrisch gekrümmte Führungabschnitte 51d ab, welche sich ebenfalls in axialer Richtung zwischen den besagten beiden Ebenen erstrecken. Schließlich weist die Sperrfeder 51 noch zwei Sperrnasen 51e auf, welche vom Grundbogen 51 a radial (nach außen) abstehen, zwei Stützfinger 51f, welche vom Grundbogen 51 a (oder alternativ vom Lagerbogen 51 b) axial abstehen, und zwei Öffnungen 51 g, welche im Grundbogen 51 a ausgebildet sind.

Die Gleitlagerbuchse 28 weist vorliegend eine größere axiale Abmessung als die von ihr ausgekleidete Aufnahme auf, so dass sie in axialer Richtung über das ihr zugeordnete Beschlagteil, also vorliegend das erste Beschlagteil 11, übersteht, was einen Überstand 28a definiert. Die Sperrfeder 51 stützt sich an dem Überstand 28a der Gleitlagerbuchse 28 ab, indem einerseits der Lagerbogen 51 b und, falls vorhanden, die Führungsabschnitte 51 d am Überstand 28a der Gleitlagerbuchse 28 anliegen, und andererseits auf der dem Lagerbogen 51b radial gegenüberliegenden Seite die Federarme 51c gegen den Überstand 28a der Gleitlagerbuchse 28 gespannt sind. Die Endfinger 35a der Feder 35 durchdringen die Öffnungen 51g.

Die Sperrfeder 51 wirkt mit einer zur Gleitlagerbuchse 28 konzentrischen und radial außerhalb derselben angeordneten Verzahnung 55 am ersten Beschlagteil 11 zusammen, deren Zähne radial nach innen weisen, d.h. die als weiterer Zahnkranz ausgebildet ist, vorliegend auf der Kehrseite des Zahnkranzes 17 und konzentrisch zu diesem. Die Sperrfeder 51 sperrt die Keilsegmente 27 im nicht-angetriebenen Zustand des Beschlags 10, indem die Sperrnasen in Eingriff mit der Verzahnung 55 stehen. Eine Bewegung der Keilsegmente 27 wird durch eine Anlage der Endfinger 35a der Feder 35 an die Ränder der jeweiligen Öffnungen 51g verhindert. Da die Öffnungen 51 g größer als der Querschnitt der Endfinger 35a sind, erfolgt die Anlage erst nach einer - von den Toleranzen abhängigen - geringfügigen Bewegung wenigstens eines der Keilsegmente 27, d.h. nach einer geringfügigen Drehung des Exzenters.

Die Sperrfeder 51 wird durch den angetriebenen Mitnehmer 21 gelöst, indem dieser mittels eines Aussteuernockens 25a, welcher vorzugsweise an der Abdeckscheibe 25 ausgebildet ist, in Anlage an einen der Stützfinger 51f gelangt, wobei für jede Drehrichtung jeweils ein Aussteuernocken 25a und ein Stützfinger 51f vorgesehen sind. Wenn der Mitnehmer 21 den Stützfinger 51f beaufschlagt, beginnt er die Sperrnasen 51e aus der Verzahnung 55 zu ziehen, und zwar radial nach innen. Die auf der Gleitlagerbuchse 28 drehbar gelagerte Sperrfeder 51 dreht sich dann mit dem Mitnehmer 21 mit. Die von einander abgewandten Ränder der Öffnungen 51 g verlaufen schräg zur radialen Richtung. Sobald der nacheilend angeordnete Endfinger 35a an den nacheilend angeordneten, schrägen Rand der zugeordneten Öffnung 51 g gelangt, bewegt sich der Bereich der Sperrfeder 51 mit den Sperrnasen 51 e, also der Grundbogen 51 a, radial weiter nach innen. Die Sperrnasen 51e und die Verzahnung 55 kommen dann vollständig außer Eingriff. Zeitgleich oder danach kommt das Mitnehmersegment 29 in Anlage an das nacheilende der beiden Keilsegmente 27, worauf der Exzenter beginnt, sich zu drehen (umzulaufen). Wird der Mitnehmer 21 gestoppt, so bringen die Federarme 51c die Sperrnasen 51e wieder in Eingriff mit der Verzahnung 55, so dass die Keilsegmente 27 wieder gesperrt sind.

Die Gleitlagerbuchse 28 weist an dem vom Überstand 28a abgewandten Ende einen radial vorstehenden Sicherungsbereich 28b auf, welcher als Axialsicherung gegen ein Verschieben der Gleitlagerbuchse 28 in axialer Richtung vom zweiten Beschlagteil 12 weg wirkt. In axialer Richtung auf das zweite Beschlagteil 12 zu wirkt letzteres als Axialsicherung gegen ein Verschieben der Gleitlagerbuchse 28. Zur Einbringung der Gleitlagerbuchse 28 in die Aufnahme des ersten Beschlagteils 11 wird in einem ersten Schritt das erste Beschlagteil 11 auf einen Halter H eines Werkzeugs aufgelegt und vorzentriert und die Gleitlagerbuchse 28 auf einen Dorn D des Werkzeugs gesetzt. In einem zweiten Schritt wird durch eine Relativbewegung von Dorn D und (dem das erste Beschlagteil 11 aufnehmenden) Halter H die Gleitlagerbuchse 28 in die Aufnahme des ersten Beschlagteils eingepresst. Die Außenabmessung der Gleitlagerbuchse 28 ist im Rahmen einer Presspassung gleich oder vorzugsweise (zum Toleranzausgleich) etwas größer als die Innenabmessung der Aufnahme des ersten Beschlagteils 11 gewählt, so dass diese Presspassung die Axialsicherung unterstützt. Das Material des ersten Beschlagteils 11 ist aufgrund eines zuvor durchgeführten Härtungsvorgangs vorzugsweise härter als das Material der Gleitlagerbuchse 28. Eventuell überschüssiges Material, welches aufgrund der Unterschiede der Abmessung beim Einpressen verdrängt wird, sammelt sich an dem - bezüglich der Bewegung des Dorns D - nacheilenden Ende der Gleitlagerbuchse 28 an.

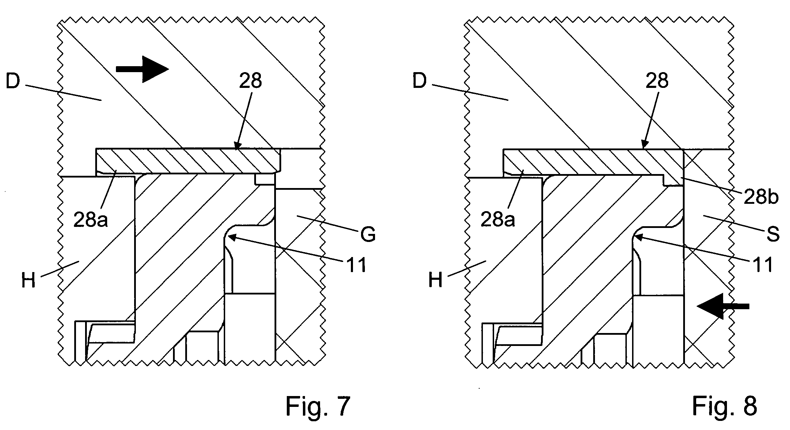

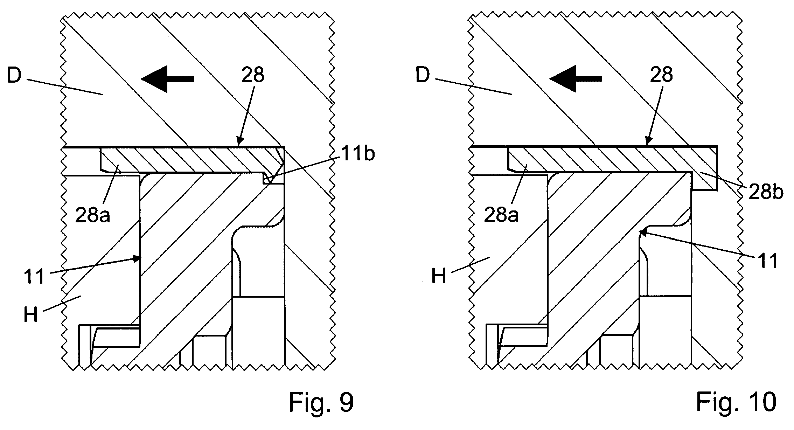

Um den Sicherungsbereich 28b herzustellen, existieren mehrere Möglichkeiten. Dabei kann der hergestellte Sicherungsbereich 28b in einer ringförmigen Vertiefung 11b des ersten Beschlagteils 11 um die Aufnahme für die Gleitlagerbuchse 28 herum angeordnet werden (Fig. 8, 9), oder er kann auf der Stirnfläche des ersten Beschlagteils 11 aufliegen (Fig. 10), d.h. axial überstehen.

Der Sicherungsbereich 28b kann an dem - bezüglich der Bewegung des Dorns D - vorauseilenden Ende der Gleitlagerbuchse 28 ausgebildet werden. Hierzu wird das erste Beschlagteil 11 im oben genannten ersten Schritt zwischen dem Halter H und einem Gegenhalter G eingespannt. Die Gleitlagerbuchse 28 wird im oben genannten zweiten Schritt so weit eingepresst, dass am nacheilenden Ende der Überstand 28a und am vorauseilenden Ende ein weiterer Überstand entsteht (Fig. 7). Das Material dieses weiteren Überstands wird dann in einem dritten Schritt umgeformt, indem es radial nach außen gedrängt wird, beispielsweise mittels eines Stempels S, welcher anstelle des Gegenhalters G vorgesehen und relativ zum Dorn D bewegt wird, während der Halter H und der Dorn D relativ zueinander unbewegt bleiben. Durch das Umformen entsteht der Sicherungsbereich 28b (Fig. 8).

Alternativ kann der Sicherungsbereich 28b an dem - bezüglich der Bewegung des Dorns D - nacheilenden Ende der Gleitlagerbuchse 28 ausgebildet werden. Dabei sind zwei Varianten möglich. In der einen, nicht dargestellten Variante wird der Sicherungsbereichs 28b nachträglich ausgebildet. Die Gleitlagerbuchse 28 wird im oben genannten zweiten Schritt so weit eingepresst, dass am voreilenden Ende der Überstand 28a und am nacheilenden Ende ein weiterer Überstand entsteht. Das Material dieses weiteren Überstands wird dann in einem dritten Schritt umgeformt, indem es radial nach außen gedrängt wird, beispielsweise mittels eines Stempels, eines Schlages, Taumelnieten o.ä., so dass der Sicherungsbereich 28b entsteht.

In der anderen Variante (Fig. 9, 10) ist der Sicherungsbereich 28b bereits vor dem Einpressen an der Gleitlagerbuchse 28 vorgebildet oder fertig ausgebildet. Gegenüber dem Halter H bewegt sich der Dorn D in der entgegengesetzten Richtung wie in Fig. 7. Soweit der Sicherungsbereich 28b vor dem Einpressen nur vorgebildet ist, wird die Gleitlagerbuchse 28 im zweiten Schritt eingepresst bis am voreilenden Ende der Überstand 28a und am nacheilenden Ende ein weiterer Überstand entsteht (Fig. 9), wenigstes bezüglich der ringförmigen Vertiefung 11b. Im dritten Schritt wird das Material des vorgebildeten Sicherungsbereichs 28b umgeformt, beispielsweise mittels eines Stempels, bis dieser fertig ausgebildet ist, d.h. radial absteht in der Art eines Bundes. Die ringförmige Vertiefung 11b kann als Gegenstempel dienen. Soweit der Sicherungsbereich 28b vor dem Einpressen bereits fertig ausgebildet ist, beispielsweise als ein (radial abstehender) Bund, wird die Gleitlagerbuchse 28 im zweiten Schritt eingepresst bis am voreilenden Ende der Überstand 28a entsteht und am nacheilenden Ende der Sicherungsbereich 28b seine Endposition erreicht, d.h. in der ringförmigen Vertiefung 11b zu liegen kommt (Endposition der Gleitlagerbuchse 28 wie in Fig. 8) oder auf der Stirnseite des ersten Beschlagteils 11 aufliegt (Fig. 10).

### Bezugszeichenliste

- 1: Fahrzeugsitz
- 3: Sitzteil
- 4: Lehne
- 5: Handrad
- 7: Antriebswelle
- 10: Beschlag
- 11: erstes Beschlagteil
- 11b: ringförmige Vertiefung
- 12: zweites Beschlagteil
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 25a: Aussteuernocken
- 27: Keilsegment
- 28: Gleitlagerbuchse
- 28a: Überstand
- 28b: Sicherungsbereich
- 29: Mitnehmersegment
- 35: Feder
- 35a: Endfinger
- 43: Sicherungsring
- 44: Dichtring
- 51: Sperrfeder, Sperrelement
- 51a: Grundbogen
- 51b: Lagerbogen
- 51c: Federarm
- 51d: Führungsabschnitt
- 51e: Sperrnase
- 51f: Stützfinger
- 51g: Öffnung
- 55: Verzahnung
- D: Dorn
- G: Gegenhalter
- H: Halter
- S: Stempel

## Patentansprüche

1. Beschlag für einen Fahrzeugsitz, insbesondere für einen Kraftfahrzeugsitz, mit
a) einem ersten Beschlagteil (11) und einem zweiten Beschlagteil (12), welche miteinander in Getriebeverbindung stehen mittels eines Zahnrades (16) und eines Zahnkranzes (17), die miteinander kämmen,
b) einem von einem Mitnehmer (21) angetriebenen, umlaufenden Exzenter (27, 27) zum Antrieb einer relativen Abwälzbewegung von Zahnrad (16) und Zahnkranz (17), wobei das erste Beschlagteil (11) den Exzenter (27, 27) aufnimmt, welcher sich am zweiten Beschlagteil (12) abstützt,
c) einem Sperrelement (51), welches den Exzenter (27, 27) im nicht-angetriebenen Zustand des Beschlags (10) durch Zusammenwirken mit einer am ersten Beschlagteil (11) ausgebildeten Verzahnung (55) sperrt und welches den Exzenter (27, 27) bei Antrieb durch den Mitnehmer (21) freigibt,
wobei
d) der Zahnkranz (17) an dem die Verzahnung (55) aufweisenden ersten Beschlagteil (11) und das Zahnrad (16) am zweiten Beschlagteil (12) ausgebildet ist und
e) das erste Beschlagteil (11) den Exzenter (27, 27) mittels einer zum Zahnkranz (17) konzentrischen Gleitlagerbuchse (28) aufnimmt, welche mit einem Überstand (28a) axial über die von ihr ausgekleidete Aufnahme des ersten Beschlagteils (11) übersteht,
**dadurch gekennzeichnet, dass**
f) das Sperrelement (51) mittels eines Lagerbogens (51b) und/oder wenigstens eines Führungsabschnittes (51d) und/oder wenigstens eines Federarms (51c) am Überstand (28a) der Gleitlagerbuchse (28) abgestützt ist.

2. Beschlag nach Anspruch 1, **dadurch gekennzeichnet, dass** die Verzahnung (55) auf der vom Zahnkranz (17) abgewandten Seite des ersten Beschlagteils (11) ausgebildet ist.

3. Beschlag nach einem der vorhergehenden Ansprüche, **dadurch gekennzeichnet, dass** die Verzahnung (55) konzentrisch zum Zahnkranz (17) als ein weiterer Zahnkranz ausgebildet ist, insbesondere auf der Kehrseite des Zahnkranzes (17).

4. Beschlag nach einem der vorhergehenden Ansprüche, **dadurch gekennzeichnet, dass** das Sperrelement (51) zum Zusammenwirken mit der Verzahnung (55) wenigstens eine radial nach außen abstehende Sperrnase (51e) aufweist.

5. Beschlag nach einem der vorhergehenden Ansprüche, **dadurch gekennzeichnet, dass** zwei von einer Feder (35) beaufschlagte Keilsegmente (27) den Exzenter (27, 27) definieren, und dass das Sperrelement (51) wenigstens eine von der Feder (35) durchdrungene Öffnung (51g) aufweist, wobei das Sperrelement (51) den Exzenter (27, 27) sperrt, indem die Feder (35) an einem Rand der Öffnung (51 g) anliegt, gegebenenfalls nach einer geringfügigen Drehung des Exzenters (27, 27).

6. Beschlag nach einem der vorhergehenden Ansprüche, **dadurch gekennzeichnet, dass** der Mitnehmer (21) wenigstens einen Aussteuernocken (25a) aufweist, welcher bei Antrieb des Mitnehmers (21) mit einem Stützfinger (51f) der Sperrelementes (51) zusammenwirkt und das Sperrelement (51) von der Verzahnung (55) löst.

7. Beschlag nach einem der vorhergehenden Ansprüche, **dadurch gekennzeichnet, dass** ein Umklammerungsring (13) das erste Beschlagteil (11) und das zweite Beschlagteil (12) axial zusammenhält unter Bildung einer scheibenförmigen Einheit.

8. Fahrzeugsitz, insbesondere Kraftfahrzeugsitz, mit wenigstens einem Beschlag nach einem der vorhergehenden Ansprüche, einem Sitzteil (3), welches mit einem der beiden Beschlagteile (11, 12) verbunden ist, und einer Lehne (4), welche mit dem anderen den beiden Beschlagteile (11, 12) verbunden ist.

## Claims

1. Fitting for a vehicle seat, in particular for a motor vehicle seat, comprising
a) a first fitting part (11) and a second fitting part (12) which are in a geared connection with one another by means of a gearwheel (16) and a gear rim (17) which mesh with one another,
b) a peripheral eccentric (27, 27) driven by a drive element (21) for driving a relative rolling movement of the gearwheel (16) and the gear rim (17), wherein the first fitting part (11) receives the eccentric (27, 27) which is supported on the second fitting part (12),
c) a blocking element (51) which blocks the eccentric (27, 27) in the non-driven state of the fitting (10) by cooperation with a toothing (55) formed on the first fitting part (11) and which releases the eccentric (27, 27) when driven by the drive element (21),
wherein
d) the gear rim (17) is formed on the first fitting part (11) comprising the toothing (55) and the gearwheel (16) is formed on the second fitting part (12) and
e) the first fitting part (11) receives the eccentric (27, 27) by means of a plain bearing bush (28) concentric to the gear rim (17), said plain bearing bush protruding with a projection (28a) axially over the receiver of the first fitting part (11) lined by said plain bearing bush,
**characterized in that**
f) the blocking element (51) is supported on the projection (28a) of the plain bearing bush (28) by means of a bearing curve (51b) and/or at least one guide portion (51d) and/or at least one spring arm (51c).

2. Fitting according to Claim 1, **characterized in that** the toothing (55) is formed on the side of the first fitting part (11) remote from the gear rim (17).

3. Fitting according to either of the preceding claims, **characterized in that** the toothing (55) is formed concentrically to the gear rim (17) as a further gear rim, in particular on the reverse side of the gear rim (17).

4. Fitting according to one of the preceding claims, **characterized in that** the blocking element (51) for cooperating with the toothing (55) comprises at least one blocking lug (51e) protruding radially outwards.

5. Fitting according to one of the preceding claims, **characterized in that** two wedge segments (27) acted upon by a spring (35) define the eccentric (27, 27) and **in that** the blocking element (51) comprises at least one opening (51g) penetrated by the spring (35), wherein the blocking element (51) blocks the eccentric (27, 27) by the spring (35) bearing against an edge of the opening (51g), optionally after a slight rotation of the eccentric (27, 27).

6. Fitting according to one of the preceding claims, **characterized in that** the drive element (21) comprises at least one control cam (25a) which, when the drive element (21) is driven, cooperates with a support finger (51f) of the blocking element (51) and releases the blocking element (51) from the toothing (55).

7. Fitting according to one of the preceding claims, **characterized in that** a clip ring (13) holds the first fitting part (11) and the second fitting part (12) axially together, forming a disk-shaped unit.

8. Vehicle seat, in particular motor vehicle seat, comprising at least one fitting according to one of the preceding claims, a seat part (3) which is connected to one of the two fitting parts (11, 12) and a backrest (4) which is connected to the other of the two fitting parts (11, 12).

## Revendications

1. Ferrure pour un siège de véhicule, en particulier pour un siège de véhicule automobile, comprenant
a) une première partie de ferrure (11) et une deuxième partie de ferrure (12) qui sont en liaison d'engrenage l'une avec l'autre au moyen d'une roue dentée (16) et d'une couronne dentée (17) qui s'engrènent l'une dans l'autre,
b) un excentrique périphérique (27, 27), entraîné par un dispositif d'entraînement (21) pour l'entraînement d'un mouvement de roulement relatif de la roue dentée (16) et de la couronne dentée (17), la première partie de ferrure (11) recevant l'excentrique (27, 27) qui s'appuie sur la deuxième partie de ferrure (12),
c) un élément de blocage (51) qui bloque l'excentrique (27, 27) dans l'état non entraîné de la ferrure (10) par coopération avec une denture (55) réalisée au niveau de la première partie de ferrure (11) et qui libère l'excentrique (27, 27) lors de l'entraînement par le dispositif d'entraînement (21),
d) la couronne dentée (17) étant réalisée au niveau de la première partie de ferrure (11) présentant la denture (55) et la roue dentée (16) étant réalisée au niveau de la deuxième partie de ferrure (12) et
e) la première partie de ferrure (11) recevant l'excentrique (27, 27) au moyen d'une douille de palier lisse (28) concentrique à la couronne dentée (17), qui dépasse axialement avec un dépassement (28a) au-delà du logement de la première partie de ferrure (11) enveloppé par celle-ci,
**caractérisée en ce que**
f) l'élément de blocage (51) est supporté au moyen d'un arc de palier (51b) et/ou d'au moins une portion de guidage (51d) et/ou d'au moins un bras de ressort (51c) sur le dépassement (28a) de la douille de palier lisse (28).

2. Ferrure selon la revendication 1, **caractérisée en ce que** la denture (55) est réalisée sur le côté de la première partie de ferrure (11) opposé à la couronne dentée (17).

3. Ferrure selon l'une quelconque des revendications précédentes, **caractérisée en ce que** la denture (55) est réalisée de manière concentrique à la couronne dentée (17) sous forme de couronne dentée supplémentaire, en particulier sur le revers de la couronne dentée (17).

4. Ferrure selon l'une quelconque des revendications précédentes, **caractérisée en ce que** l'élément de blocage (51), en vue de coopérer avec la denture (55), présente au moins un ergot de blocage (51e) faisant saillie radialement vers l'extérieur.

5. Ferrure selon l'une quelconque des revendications précédentes, **caractérisée en ce que** deux segments de clavette (27) sollicités par un ressort (35) définissent l'excentrique (27, 27) et **en ce que** l'élément de blocage (51) présente au moins une ouverture (51g) à travers laquelle passe le ressort (35), l'élément de blocage (51) bloquant l'excentrique (27, 27) par le fait que le ressort (35) s'applique contre un bord de l'ouverture (51g), éventuellement après une légère rotation de l'excentrique (27, 27).

6. Ferrure selon l'une quelconque des revendications précédentes, **caractérisée en ce que** le dispositif d'entraînement (21) présente au moins une came de réglage (25a) qui, lors de l'entraînement du dispositif d'entraînement (21), coopère avec un doigt de support (51f) de l'élément de blocage (51) et libère l'élément de blocage (51) de la denture (55).

7. Ferrure selon l'une quelconque des revendications précédentes, **caractérisée en ce qu'**une bague de serrage (13) retient axialement la première partie de ferrure (11) et la deuxième partie de ferrure (12) en formant une unité en forme de disque.

8. Siège de véhicule, en particulier siège de véhicule automobile, comprenant au moins une ferrure selon l'une quelconque des revendications précédentes, une partie de siège (3) qui est connectée à l'une des deux parties de ferrure (11, 12) et un dossier (4) qui est connecté à l'autre des deux parties de ferrure (11, 12).
